# EUROPEAN PATENT SPECIFICATION

(11) **EP 4 406 405 B1**
(45) Date of publication and mention of the grant of the patent: **02.12.2026**
(21) Application number: 24151651.7
(22) Date of filing: 12.01.2024
(51) Int. Cl.: A01G 20/47, A47L 5/14, A47L 9/08, E01H 1/08

(54) **VACUUM DEVICE**
SAUGGERÄT
ASPIRATEUR

(30) Priority: 27.01.2023 JP 2023011069
(43) Date of publication of application: 31.07.2024
(73) Proprietor: Yamabiko Corporation, Ohme-shi Tokyo 198-8760 (JP)
(72) Inventor: UMEKI, Tomohisa, Tokyo, 198-8760 (JP)
(74) Representative: Wohlfahrt, Jan Günther

(56) References cited:
- EP-A1- 0 501 675
- EP-A1- 4 035 524
- DE-T2- 69 119 113
- JP-A- 2001 070 207

## Description

### BACKGROUND

### Technical Field

The present invention relates to a vacuum configured to perform sucking work to suck in dust and debris.

### Background Art

A "vacuum" is understood by the skilled person in general as a vacuum device to suck and/or to blow, especially a vacuum cleaner and/or a vacuum blower. There is known a conventional technique of a vacuum used in work to suck in and collect dust and debris such as fallen leaves (hereinafter referred to as "sucking work") disclosed, for example, in Patent Literature 1. FIG. 5 to FIG. 7 illustrate an exemplary configuration of the conventional vacuum disclosed in Patent Literature 1.

A vacuum 1A of the illustrated conventional example is a handheld electric vacuum configured to perform sucking work, including: a pipe 10 including a suction port 10A at one end and a discharge port 10B at the other end; a blower fan 20 provided outside the pipe 10 and driven by an electric motor; a handle 30 provided outside the pipe 10 and near the discharge port 10B in a longitudinal direction of the pipe 10, and configured to be held by a hand; and an ejector 40A provided near the suction port 10A in the longitudinal direction of the pipe 10, and configured to feed pressurized wind generated by the blower fan 20 into the pipe 10 from around the pipe 10, and to eject the pressurized wind to the discharge port 10B. A battery 50 configured to supply the electric motor with power is attached to the outside of the pipe 10 near the discharge port 10B. The pressurized wind ejected from the ejector 40A passes through the inside of the pipe 10 along the inner surface of the pipe 10 and is ejected to the discharge port 10B. This pressurized wind causes the pressure inside the pipe 10 to be lowered, thereby to generate suction flow (negative pressure) in the pipe 10 from the suction port 10A toward the discharge port 10B. Accordingly, the vacuum 1A sucks in dust and so forth into the pipe 10 from the suction port 10A provided at one end of the pipe 10, and discharges the sucked objects such as the dust from the discharge port 10B provided at the other end of the pipe 10 to collect the sucked objects in a collector (not shown), such as a bag, attached to the discharge port 10B.

In addition, in the vacuum 1A of the illustrated conventional example, the pipe 10 includes a front pipe 11 having the suction port 10A, and a pipe body 12 having the discharge port 10B at the base end, the front pipe 11 is connected to the front end of the pipe body 12, and the ejector 40A ejects the pressurized wind along the outside (outer circumferential surface) of the front pipe 11 inserted into the pipe body 12.

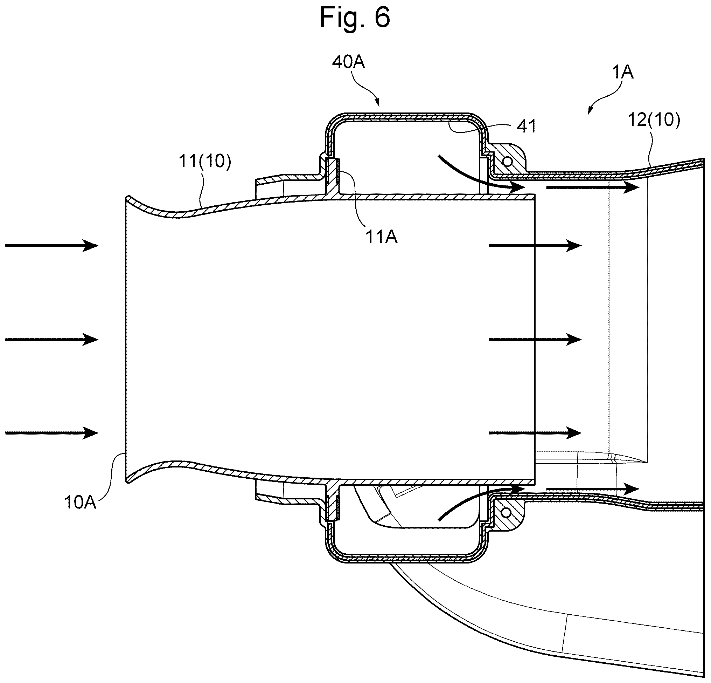

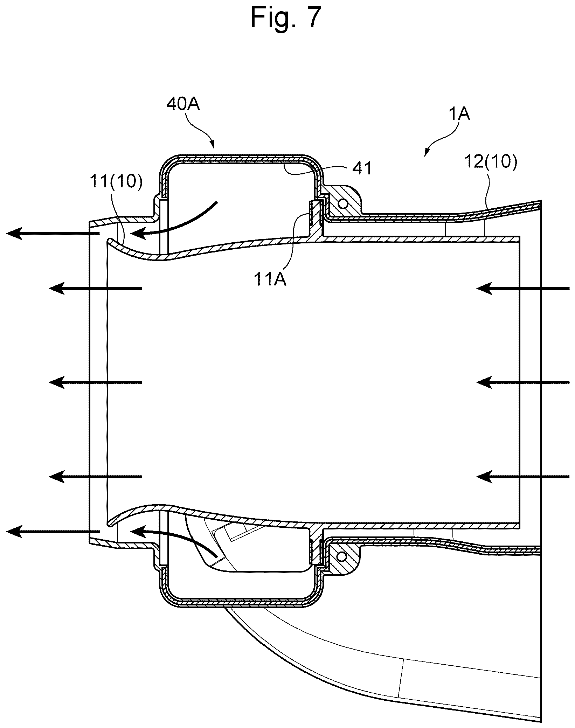

The front pipe 11 is slidably connected to the pipe body 12, and a division plate 11A is provided on the periphery of the front pipe 11 and configured to switch between the discharge port 10B and the suction port 10A to which the pressurized wind fed by the ejector 40A is ejected (FIG. 6, FIG. 7).

When the front pipe 11 is slid toward the front end, the division plate 11A contacts a stopper provided at the edge of a circular flow path 41 on the front end side (the circular flow path 41 provided around a central axis P of the pipe 10, into which pressurized wind generated by the blower fan 20 is introduced). By this means, the division plate 11A blocks the pressurized wind flowing from the circular flow path 41 toward the front end of the pipe 10, and therefore the pressurized wind entering from the circular flow path 41 into the pipe 10 is ejected to the discharge port 10B along the periphery of the front pipe 11. In this state, the front end of the front pipe 11 is the suction port 10A, and suction flow is formed in the pipe 10 from the front end portion toward the base end portion of the pipe 10 as shown in the arrows in FIG. 6 (the sucking state in FIG. 6).

On the other hand, when the front pipe 11 is slid toward the base end, the division plate 11A contacts a stopper provided at the edge of the circular flow path 41 on the base end side. By this means, the division plate 11A blocks the pressurized wind flowing from the circular flow path 41 toward the base end of the pipe 10, and therefore the pressurized wind entering from the circular flow path 41 into the pipe 10 is ejected to the front end (suction port 10A) along the periphery of the front pipe 11. In this state, the front end of the front pipe 11 serves as a blowing port, and discharge flow is formed in the pipe 10 from the base end to the front end of the pipe 10 as shown in the arrows in FIG. 7 (the blowing state in FIG. 7).

The vacuum 1A of the illustrated conventional example can switch between the sucking work and the blowing work with a single machine body by incorporating such a switching configuration. Note that the vacuum having such a switching configuration becomes a working machine serving as a vacuum and a blower and may be referred to as a vacuum blower.

### Citation List

### Patent Literature

Patent Literature 1: JP 2022-114780 A
Patent Literature 2: GB 2311462 A
Patent Literature 3: EP 0 501 675 A1

### SUMMARY

In the above-described conventional vacuum, the pressurized wind entering from the circular flow path 41 into the pipe 10 is ejected to the discharge port 10B along the periphery of the front pipe 11, at a position spaced from the suction port 10A at the front end of the front pipe 11 (by a distance corresponding to the length of the front pipe 11). Therefore, in the conventional vacuum, it is difficult to increase the flow rate of air (air flow) sucked (drawn) from the suction port and to increase the initial velocity (sucking rate) of sucked objects near the suction port.

Then, there may be provided an ejection port through which pressurized wind is ejected to the discharge port from near the suction port, in other words, there may be provided near the suction port an ejection port through which pressurized wind is ejected to the discharge port (see Patent Literature 2, for example). However, the technique disclosed in Patent Literature 2, for example, may lower the suction force with turbulence in pressurized wind in the pipe due to a rapid change in the path (cross-sectional area) or direction immediately after the ejection port.

The present invention has been made in view of the above issue, and it is an object of the present invention to provide a vacuum capable of increasing the air flow with a larger volume of air sucked from a suction port and increasing the initial velocity (sucking rate) of sucked objects near the suction port, and also capable of smoothly feeding pressurized wind in the pipe and efficiently sucking objects to collect the sucked objects.

To address the above issue, the vacuum according to the present invention is defined by claim 1.

In a preferred aspect, the turn portion includes a continuous curved surface.

In another preferred aspect, the turn portion includes a ring-shaped member configured to be attached to and detached from the pipe.

In further preferred aspect, the turn portion is configured to be attached to and detached from the pipe, and with the turn portion detached from the pipe, the nozzle ejects the pressurized wind generated by the blower fan and fed to the outside of the inner pipe to an opposite side of the discharge port along the outside of the inner pipe.

In still another preferred aspect, the turn portion is configured to be attached to and detached from the pipe, and according to the turn portion being attached to or detached from the pipe, the nozzle is configured to switch between a state where the pressurized wind generated by the blower fan and fed to the outside of the inner pipe is ejected to the discharge port along an inside of the inner pipe and a state where the pressurized wind generated by the blower fan and fed to the outside of the inner pipe is ejected to an opposite side of the discharge port along the outside of the inner pipe.

In yet another preferred aspect, a portion of the inner pipe nearer to the discharge port than the narrowest portion has a smaller inclination with respect to an axis of the inner pipe than a portion of the inner pipe nearer to the suction port than the narrowest portion.

According to the present invention, with the ejection port provided near the suction port by the turn portion and the inner pipe, it is possible to increase the air flow with a larger volume of air sucked from the suction port and increase the initial velocity (sucking rate) of sucked objects near the suction port. In addition, it is possible to smoothly feed pressurized wind in the pipe, with the ejection port provided outward of the narrowest portion of the inner pipe, the narrowest portion being provided nearer to the base end than the ejection port. By this means, it is possible to efficiently suck in objects from the suction port to collect the sucked objects. Since the ejection port is located between the turn portion and the narrowest portion, the introduced air smoothly moves along the pipe wall surface toward the narrowest portion while maintaining its direction from the turn portion to the ejection port.

### BRIEF DESCRIPTION OF THE DRAWINGS

FIG. 1 is an enlarged vertical cross-sectional view of a main portion around a nozzle of a vacuum according to an embodiment of the present invention (a sucking state with a turn portion attached);
FIG. 2 is an enlarged perspective view of the main portion around the nozzle of the vacuum according to the embodiment of the present invention (a sucking state with a turn portion attached);
FIG. 3 is an enlarged vertical cross-sectional view of the main portion around the nozzle of the vacuum according to the embodiment of the present invention (a blowing state with a turn portion detached);
FIG. 4 is an enlarged perspective view of the main portion around the nozzle of the vacuum according to the embodiment of the present invention (a blowing state with a turn portion detached);
FIG. 5 is a side view of a conventional vacuum;
FIG. 6 is an enlarged vertical cross-sectional view of a main portion around an ejector 40A of FIG. 5 (a sucking state); and
FIG. 7 is an enlarged vertical cross-sectional view of the main portion around the ejector 40A of FIG. 5 (a blowing state).

### DETAILED DESCRIPTION

Hereinafter, an embodiment of the present invention will be described with reference to the drawings. In the following description, the same reference numbers in the different drawings indicate the same functional sections, and therefore repeated description for each of the drawings will be omitted.

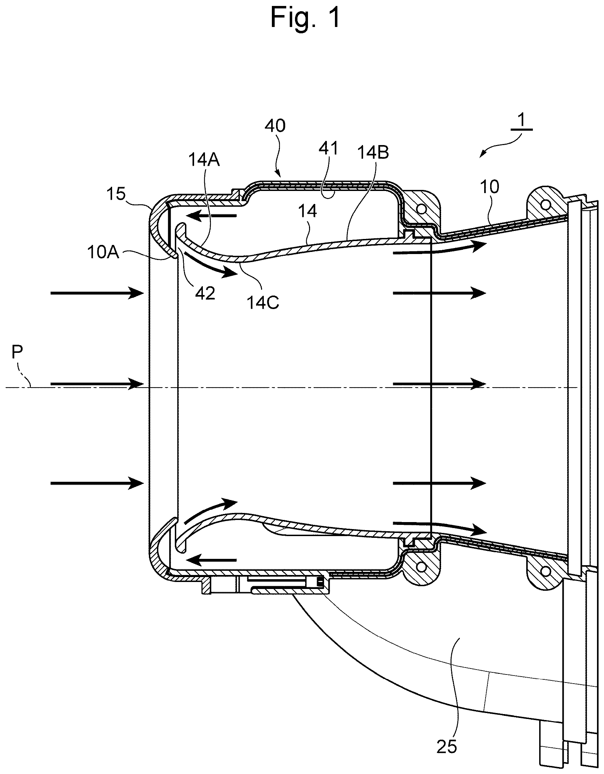

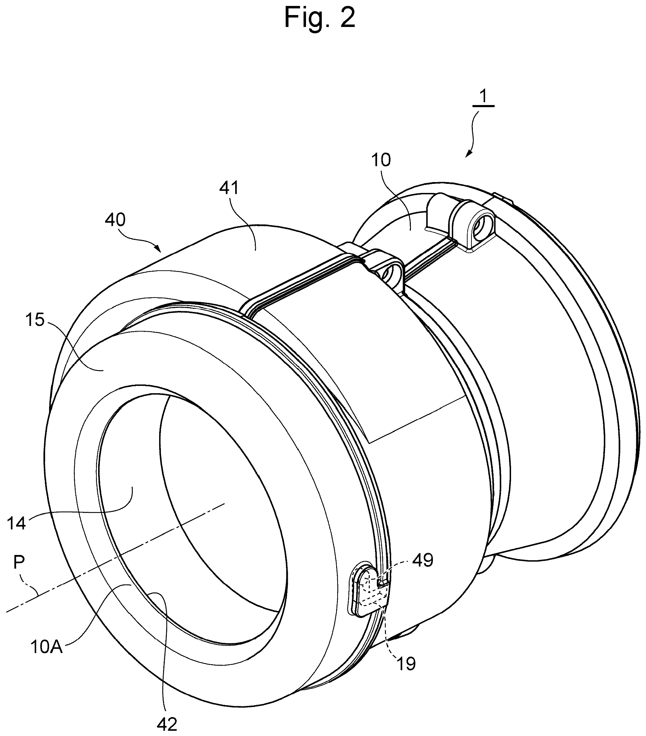

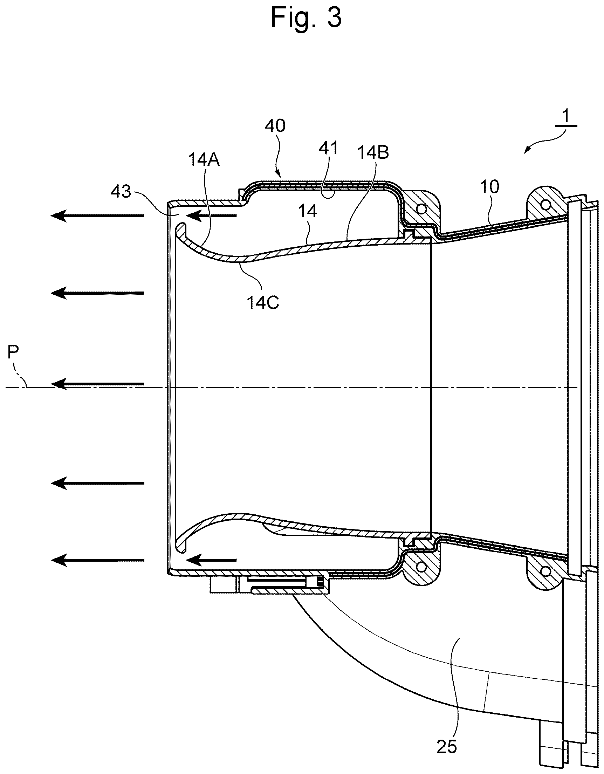

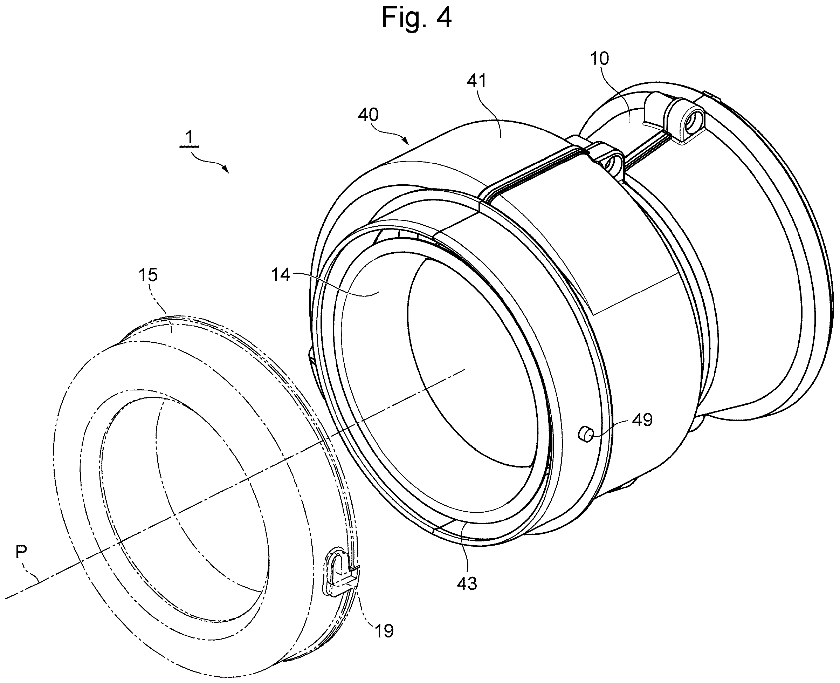

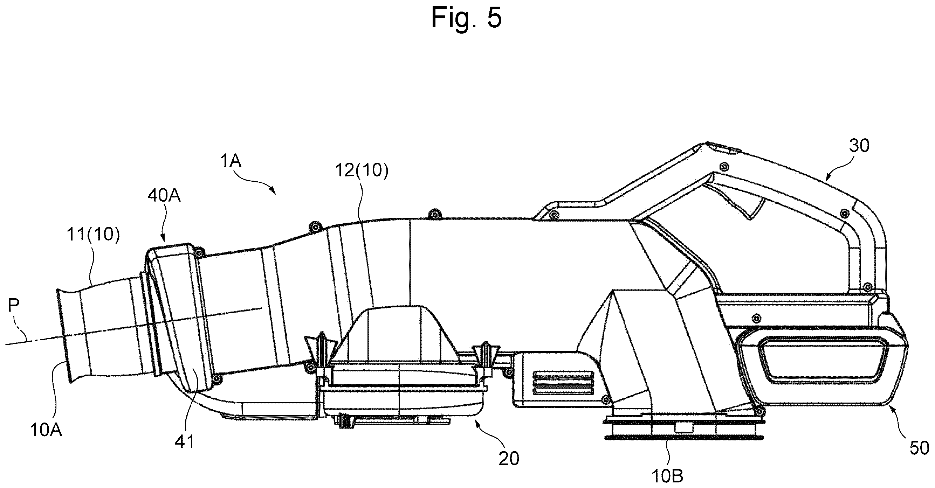

A vacuum 1 of the present embodiment can switch between sucking work and blowing work by incorporating a switching configuration like the vacuum 1A of the conventional example shown in FIG. 5 to FIG. 7. Hereinafter, first, the switched state for the sucking work will be described with reference to FIG. 1 and FIG. 2. Next, the switched state for the blowing work will be described with reference to FIG. 3 and FIG. 4. Refer to FIG. 5 for the reference numbers other than those shown in FIG. 1 to FIG. 4.

Like the vacuum 1A of the conventional example, the vacuum 1 of the present embodiment is a handheld working machine for the sucking work, and includes a pipe 10 configured to suck in dust and debris, a blower fan 20, a handle 30, and a nozzle 40. That is, the vacuum 1 of the present embodiment includes the nozzle 40 instead of the ejector 40A of the vacuum 1A of the conventional example.

In the vacuum 1 of the present embodiment, basically, the functions of the components (the pipe 10, the blower fan 20, the handle 30, and the like) other than the nozzle 40 are substantially similar to those of the vacuum 1A of the conventional example. Thus, the nozzle 40, which is a characteristic portion of the present embodiment, will mainly be described.

However, it is needless to mention that the shape and layout configuration of the components (the pipe 10, the blower fan 20, the handle 30, and the like) other than the nozzle 40 are not limited to those of the conventional example shown in FIG. 5, and may be modified appropriately. For example, the blower fan 20 may be driven by a driving source such as an engine, instead of a built-in electric motor. In addition, the blower fan 20 may not be attached to the outside of the pipe 10.

The nozzle 40 is provided near a suction port 10A in a longitudinal direction of the pipe 10, and configured to feed pressurized wind generated by the blower fan 20 from around the pipe 10 into the pipe 10 and eject the pressurized wind to a discharge port 10B. The pressurized wind is ejected from the nozzle 40 to the discharge port 10B along the inner surface of the pipe 10. This pressurized wind causes the pressure inside the pipe 10 to be lowered, thereby to generate suction flow in the pipe 10 from the suction port 10A toward the discharge port 10B.

The nozzle 40 includes a circular flow path 41 protruding outward of the pipe 10. The circular flow path 41 is provided circumferentially around a central axis P of the pipe 10. The pressurized wind generated by the blower fan 20 is introduced into the circular flow path 41 via a pressure flow path 25.

The circular flow path 41 includes an ejection port 42 that is an opening configured to communicate with the inside of the pipe 10 over the entire circumference around the central axis P of the pipe 10. The pressurized wind is ejected through the ejection port 42 along the inner surface of the pipe 10. When ejected to the pipe 10 through the ejection port 42, the pressurized wind may contain a circumferential component. By this means, swirling flow along the inner wall of the pipe 10 is added, thereby to increase suction force near the inner wall of the pipe 10.

In the present embodiment, as shown in FIG. 1, the nozzle 40 includes an inner pipe 14 inserted into the inside of the circular flow path 41 of the pipe 10. The inner pipe 14 is disposed substantially coaxially with the central axis P of the pipe 10. The inner pipe 14 includes a narrowest portion 14C located slightly forward of the center in the longitudinal direction (the direction along the central axis P). The portion of the inner pipe 14 nearer to the front end (the front side) than the narrowest portion 14C is a flared portion 14A gradually expanding in diameter from the narrowest portion 14C toward the front (i.e., gradually reducing in diameter to the narrowest portion 14C toward the back). In addition, the portion of the inner pipe 14 nearer to the base end (the back side) than the narrowest portion 14C is a flared portion 14B gradually expanding in diameter from the narrowest portion 14C toward the back. In the present embodiment, the flared portion 14B (or the inner wall thereof) on the back side has a smaller (more gradual) inclination with respect to the central axis P than the flared portion 14A (or the inner wall thereof) on the front side.

In addition, the nozzle 40 includes a turn portion 15 disposed on the front end side (i.e., the front end portion of the pipe 10) of the circular flow path 41 of the pipe 10, (in an annular shape) around the front end portion of the inner pipe 14. The turn portion 15 is formed in an annular shape around the central axis P of the pipe 10 such that it turns from the outside to the inside of the front end portion of the inner pipe 14 and toward the base end side. In the present embodiment, the turn portion 15 basically includes a (cornerless) continuous curved surface. The inside (inner circumferential surface) of the turn portion 15 is the suction port 10A of the pipe 10, and a gap formed between the turn portion 15 and the inner pipe 14 (or the front end portion thereof) is the ejection port 42 configured to communicate with (i.e., open to) the inside of the pipe 10 in the circular flow path 41.

In the present embodiment, the turn portion 15 includes a ring-shaped member configured to be attached to and detached from the pipe 10 to allow switching between sucking work and blowing work (see also FIG. 2). However, for example, when a product is designed to perform only the sucking work (only for use as a vacuum), the turn portion 15 may be formed integrally with the pipe 10.

In the present embodiment, the base end portion of the inner pipe 14 is disposed along the inner surface of the pipe 10, and the base end of the circular flow path 41 is closed by the base end portion of the inner pipe 14.

By this means, the pressurized wind is fed from the circular flow path 41 of the nozzle 40 toward the outside of the inner pipe 14, then the pressurized wind fed to the outside of the inner pipe 14 passes between the turn portion 15 and the inner pipe 14 and turns toward the base end at around the front end portion of the inner pipe 14, and is ejected through the ejection port 42 to the discharge port 10B along the inside (inner circumferential surface) of the inner pipe 14.

In the present embodiment, as viewed in the direction along the central axis P, the ejection port 42 is provided radially outward of the narrowest portion 14C (or the inner wall thereof) of the inner pipe 14, the narrowest portion 14C being provided nearer to the base end (discharge port 10B) than the ejection port 42. Therefore, the pressurized wind ejected through the ejection port 42 is smoothly fed to the discharge port 10B along the inside (inner circumferential surface) of the inner pipe 14.

The vacuum 1 configured as described above forms suction flow in the pipe 10 from the suction port 10A at one end to the discharge port 10B at the other end. In addition, there is no reduced diameter portion in the pipe 10 in a section nearer to the base end than the narrowest portion, and therefore the pipe 10 maintains its inside diameter which is sufficient to allow large sucked objects to pass therethrough along the longitudinal direction.

By this means, the objects sucked by the vacuum 1 from the suction port 10A into the pipe 10 can be efficiently guided to the discharge port 10B, and even when large objects are sucked from the suction port 10A, the sucked objects can be smoothly guided to the discharge port 10B without clogging or the like, and then can be collected.

In addition, the vacuum 1 of the present embodiment can switch between sucking work (also referred to as a vacuum mode) and blowing work (also referred to as a blower mode) by incorporating a simple switching mechanism into the above-described nozzle 40.

As the switching mechanism, the turn portion 15 is detachably connected to the pipe 10 (or the circular flow path 41 of the nozzle 40 thereof). According to this turn portion 15 being attached or detached, the vacuum 1 of the present embodiment is configured to switch between the discharge port 10B and the suction port 10A to which the pressurized wind fed by the nozzle 40 is ejected.

In the present embodiment, the base end portion of the turn portion 15 includes, in its inner circumferential portion, a keyway 19 in an L-shape as viewed from the side, and the front end of the pipe 10 (or the circular flow path 41 of the nozzle 40 thereof) includes, in its outer circumferential portion, a projection 49. By fitting the projection 49 of the pipe 10 to the keyway 19 of the turn portion 15, the turn portion 15 is securely attached to the pipe 10 (see FIG. 2 and FIG. 4). Note that it is needless to mention that the configuration of attaching the turn portion 15 to the pipe 10 (attachment/detachment configuration) is not limited to the illustrated example.

When the turn portion 15 is detached from the pipe 10, a gap formed between the front end portion of the pipe 10 and the inner pipe 14 (or the front end portion thereof) (i.e., a gap that is an opening formed around the periphery of the front end portion of the inner pipe 14) becomes an ejection port 43 that opens to the outside (the front side) of the pipe 10 (see FIG. 3 and FIG. 4).

FIG. 1 and FIG. 2 show the switched state for the sucking work as described above. In this state, the turn portion 15 is attached to the front end side of the circular flow path 41. Accordingly, the pressurized wind is fed from the circular flow path 41 to the outside of the inner pipe 14, then passes between the turn portion 15 and the inner pipe 14, turns toward the base end at around the front end portion of the inner pipe 14, enters the pipe 10 through the ejection port 42, and is ejected to the discharge port 10B along the inner periphery of the inner pipe 14. In this state, the turn portion 15, that is, the front end of the pipe 10, is the suction port 10A, and suction flow is formed in the pipe 10 from the front end portion toward the base end portion of the pipe 10.

On the other hand, FIG. 3 and FIG. 4 show the switched state for the blowing work. In this state, the turn portion 15 is detached from the front end side of the circular flow path 41. Accordingly, the pressurized wind fed from the circular flow path 41 to the outside of the inner pipe 14 is ejected toward the front end along the periphery of the inner pipe 14 from the ejection port 43 that is an opening formed around the periphery of the front end portion of the inner pipe 14. In this state, the front end of the pipe 10 and the inner pipe 14 serves as a blowing port, and discharge flow is formed in the pipe 10 from the base end to the front end of the pipe 10.

As described above, the vacuum 1 according to the present embodiment becomes a working machine serving as a vacuum and a blower by incorporating a simple switching mechanism. In other words, the vacuum 1 according to the present embodiment can switch between the vacuum and the blower by simple switching operation. When used to clean up fallen leaves in a wide area, for example, the vacuum 1 according to the present embodiment is switched to the blower to gather the fallen leaves spread on the ground to some extent, and then switched to the vacuum to suck in the gathered fallen leaves or the like. By this means, it is possible to allow efficient collecting work with a single machine.

As described above, in the vacuum 1 according to the present embodiment, the nozzle 40 includes the inner pipe 14 disposed inside of the pipe 10 (or the circular flow path 41 thereof), and the turn portion 15 disposed (in an annular shape) around the front end portion of the inner pipe 14, the turn portion 15 including the suction port 10A and allowing the pressurized wind generated by the blower fan and fed to the outside of the inner pipe 14 (circular flow path 41) to turn toward the base end at around the front end portion of the inner pipe 14. The ejection port 42 is formed between the turn portion 15 and the inner pipe 14, and the ejection port 42 is provided radially outward of the narrowest portion (or the inner wall thereof) of the inner pipe 14, the narrowest portion being provided nearer to the base end (discharge port 10B) than the ejection port 42.

The turn portion 15 includes a (cornerless) continuous curved surface.

The turn portion 15 includes a ring-shaped member configured to be attached to and detached from the pipe 10.

The turn portion 15 is configured to be attached to and detached from the pipe 10. With the turn portion 15 detached from the pipe 10, the nozzle 40 ejects pressurized wind generated by the blower fan and fed to the outside of the inner pipe 14 (circular flow path 41) to the opposite side (the front end side) of the discharge port 10B along the outside (outer circumferential surface) of the inner pipe 14.

The turn portion 15 is configured to be attached to and detached from the pipe 10, and according to the turn portion 15 being attached to or detaching from the pipe 10, the nozzle 40 is configured to switch between a state (sucking state) where the pressurized wind generated by the blower fan and fed to the outside of the inner pipe 14 (circular flow path 41) is ejected to the discharge port 10B along the inside (inner circumferential surface) of the inner pipe 14 and a state (blowing state) where the pressurized wind generated by the blower fan and fed to the outside of the inner pipe 14 (circular flow path 41) is ejected to the opposite side (the front end side) of the discharge port 10B along the outside (outer circumferential surface) of the inner pipe 14.

A portion of the inner pipe 14 nearer to the discharge port 10B (the back side and the downstream side) than the narrowest portion 14C has a smaller inclination with respect to the axis (central axis P) of the inner pipe 14 than a portion of the inner pipe 14 nearer to the suction port 10A (the front side and the upstream side) than the narrowest portion 14C.

According to the present embodiment, with the ejection port 42 provided near the suction port 10A by the turn portion 15 and the inner pipe 14, it is possible to increase the air flow with a larger volume of air sucked from the suction port 10A and increase the initial velocity (sucking rate) of sucked objects near the suction port 10A. In addition, it is possible to smoothly feed pressurized wind in the pipe 10, with the ejection port 42 provided outward of the narrowest portion 14C of the inner pipe 14, the narrowest portion 14C being provided nearer to the base end than the ejection port 42. By this means, it is possible to efficiently suck in objects from the suction port 10A to collect the sucked objects. Since the ejection port 42 is located between the turn portion 15 and the narrowest portion 14C, the introduced air smoothly moves along the pipe wall surface toward the narrowest portion 14C while maintaining its direction from the turn portion 15 to the ejection port 42.

Although the embodiment of the present invention has been described in detail above with reference to the drawings, specific structures are not limited thereto, and any design changes that fall within the scope of the present invention, as defined by the appended claims, are encompassed by the scope of the present invention.

### DESCRIPTION OF SYMBOLS

- 1: Vacuum
- 10: Pipe
- 10A: Suction port
- 10B: Discharge port
- 14: Inner pipe
- 14C: Narrowest portion
- 15: Turn portion
- 20: Blower fan
- 25: Pressure flow path
- 40: Nozzle
- 41: Circular flow path
- 42: Ejection port (sucking state)
- 43: Ejection port (blowing state)
- P: Central axis

## Claims

1. A vacuum (1) configured to perform sucking work, comprising:
a pipe (10) including a suction port (10A) and a discharge port (10B);
a blower fan (20) driven by a driving source; and
a nozzle (40) provided near the suction port (10A) of the pipe (10), and configured to feed pressurized wind generated by the blower fan (20) into the pipe (10) from around the pipe (10), and to eject the pressurized wind to the discharge port (10B),
wherein:
the nozzle (40) includes:
an inner pipe (14) disposed substantially coaxially with a central axis (P) of the pipe (10); wherein the inner pipe (14) includes a narrowest portion (14C) located slightly forward of a center in a longitudinal direction along the central axis (P),
wherein the portion of the inner pipe nearer to a front end than the narrowest portion (14C) is a flared portion (14A) gradually expanding in diameter from the narrowest portion (14C) toward the front;
a turn portion (15) disposed around the front end portion of the inner pipe (14), the turn portion (15) including the suction port (10A) and allowing the pressurized wind generated by the blower fan (20) and fed to an outside of the inner pipe (14) to turn toward a base end at around the front end portion of the inner pipe (14); and
an ejection port (42, 43) is formed between the turn portion (15) and the inner pipe (14); wherein
the ejection port (42, 43) is provided radially outward of the narrowest portion (14C) of the inner pipe (14), the narrowest portion (14C) being provided nearer to the base end than the ejection port (42, 43).

2. The vacuum (1) according to claim 1, wherein the turn portion (15) includes a continuous curved surface.

3. The vacuum (1) according to claim 1, wherein the turn portion (15) includes a ring-shaped member configured to be attachable to and detachable from the pipe (10).

4. The vacuum (1) according to claim 1, wherein:
the turn portion (15) is configured to be attachable to and detachable from the pipe (10); and
with the turn portion (15) detached from the pipe (10), the nozzle (40) ejects the pressurized wind generated by the blower fan (20) and fed to the outside of the inner pipe (14) to an opposite side of the discharge port (10B) along the outside of the inner pipe (14).

5. The vacuum (1) according to claim 1, wherein:
the turn portion (15) is configured to be attachable to and detachable from the pipe (10); and
according to the turn portion (15) being attachable to or detachable from the pipe (10), the nozzle (40) is configured to switch between a state where the pressurized wind generated by the blower fan (20) and fed to the outside of the inner pipe (14) is ejected to the discharge port (10B) along an inside of the inner pipe (14) and a state where the pressurized wind generated by the blower fan (20) and fed to the outside of the inner pipe (14) is ejected to an opposite side of the discharge port (10B) along the outside of the inner pipe (14).

6. The vacuum (1) according to claim 1, wherein a portion of the inner pipe (14) nearer to the discharge port (10B) than the narrowest portion (14C) has a smaller inclination with respect to an axis of the inner pipe (14) than a portion of the inner pipe (14) nearer to the suction port (10A) than the narrowest portion (14C).

## Patentansprüche

1. Sauggerät (1), ausgebildet, um Saugarbeit durchzuführen, umfassend:
ein Rohr (10), enthaltend eine Ansaugöffnung (10A) und eine Auslassöffnung (10B);
ein Gebläserad (20), angetrieben durch eine Antriebsquelle; und
eine Düse (40), bereitgestellt nahe der Ansaugöffnung (10A) des Rohrs (10) und ausgebildet, um durch das Gebläserad (20) erzeugten Druckwind von um das Rohr (10) in das Rohr (10) einzuspeisen und den Druckwind zu der Auslassöffnung (10B) auszustoßen,
wobei:
die Düse (40) enthält:
ein Innenrohr (14), angeordnet im Wesentlichen koaxial mit einer Mittelachse (P) des Rohrs (10), wobei das Innenrohr (14) einen engsten, geringfügig vor einer Mitte in einer Längsrichtung, entlang der Mittelachse (P) liegenden Abschnitt (14C) enthält,
wobei der Abschnitt des Innenrohrs (14), der näher an einem Vorderende liegt als der engste Abschnitt (14C), ein aufgeweiteter Abschnitt (14A) ist, dessen Durchmesser sich von dem engsten Abschnitt (14C) nach vorne allmählich erweitert;
einen Umlenkabschnitt (15), angeordnet um den Vorderendabschnitt des Innenrohrs (14), wobei der Umlenkabschnitt (15) die Ansaugöffnung (10A) enthält und ermöglicht, dass der durch das Gebläserad (20) erzeugte und zu einer Außenseite des Innenrohrs (14) eingespeiste Druckwind zu einem Basisende hin an dem Vorderendabschnitt des Innenrohrs (14) umgelenkt wird; und
eine Ausstoßöffnung (42, 43) ist zwischen dem Umlenkabschnitt (15) und dem Innenrohr (14) ausgebildet; wobei
die Ausstoßöffnung (42, 43) radial außerhalb des engsten Abschnitts (14C) des Innenrohrs (14) bereitgestellt ist, wobei der engste Abschnitt (14C) näher an dem Basisende als die Ausstoßöffnung (42, 43) bereitgestellt ist.

2. Sauggerät (1) gemäß Anspruch 1, wobei der Umlenkabschnitt (15) eine durchgehende gekrümmte Oberfläche enthält.

3. Sauggerät (1) gemäß Anspruch 1, wobei der Umlenkabschnitt (15) ein ringförmiges Element enthält, ausgebildet, um an dem Rohr (10) anbringbar und von dem Rohr (10) abnehmbar zu sein.

4. Sauggerät (1) gemäß Anspruch 1, wobei:
der Umlenkabschnitt (15) ausgebildet ist, um an dem Rohr (10) anbringbar und von dem Rohr (10) abnehmbar zu sein; und
bei von dem Rohr (10) abgenommenem Umlenkabschnitt (15) die Düse (40) den durch das Gebläserad (20) erzeugten und zu der Außenseite des Innenrohrs (14) eingespeisten Druckwind entlang der Außenseite des Innenrohrs (14) zu einer der Auslassöffnung (10B) gegenüberliegenden Seite ausstößt.

5. Sauggerät (1) gemäß Anspruch 1, wobei:
der Umlenkabschnitt (15) ausgebildet ist, um an dem Rohr (10) anbringbar und von dem Rohr (10) abnehmbar zu sein; und
gemäß dem Anbringen des Umlenkabschnitts (15) an dem Rohr (10) oder dem Abnehmen des Umlenkabschnitts (15) von dem Rohr (10), die Düse (40) ausgebildet ist, um zwischen einem Zustand, in dem der durch das Gebläserad (20) erzeugte und zu der Außenseite des Innenrohrs (14) eingespeiste Druckwind entlang einer Innenseite des Innenrohrs (14) zu der Auslassöffnung (10B) ausgestoßen wird, und einem Zustand, in dem der durch das Gebläserad (20) erzeugte und zu der Außenseite des Innenrohrs (14) eingespeiste Druckwind entlang der Außenseite des Innenrohrs (14) zu einer der Auslassöffnung (10B) gegenüberliegenden Seite ausgestoßen wird, umzuschalten.

6. Sauggerät (1) gemäß Anspruch 1, wobei ein näher an der Auslassöffnung (10B) als der engste Abschnitt (14C) liegender Abschnitt des Innenrohrs (14) eine geringere Neigung in Bezug auf eine Achse des Innenrohrs (14) als ein näher an der Ansaugöffnung (10A) als der engste Abschnitt (14C) liegender Abschnitt des Innenrohrs (14) aufweist.

## Revendications

1. Aspirateur (1) configuré pour effectuer un travail d'aspiration, comprenant :
un tube (10) comprenant un orifice d'aspiration (10A) et un orifice de refoulement (10B) ;
un ventilateur soufflant (20) entraîné par une source d'entraînement ; et
une buse (40) prévue à proximité de l'orifice d'aspiration (10A) du tube (10), et configurée pour acheminer de l'air sous pression généré par le ventilateur soufflant (20) dans le tube (10) depuis la périphérie du tube (10), et pour éjecter l'air sous pression vers l'orifice de refoulement (10B),
dans lequel :
la buse (40) comprend :
un tube interne (14) disposé de manière sensiblement coaxiale par rapport à un axe central (P) du tube (10) ; dans lequel le tube interne (14) comprend une partie la plus étroite (14C) située légèrement en avant d'un centre dans une direction longitudinale le long de l'axe central (P),
dans lequel la partie du tube interne située plus près d'une extrémité avant que la partie la plus étroite (14C) est une partie évasée (14A) dont le diamètre s'élargit progressivement depuis la partie la plus étroite (14C) vers l'avant ;
une partie de déviation (15) disposée autour de la partie d'extrémité avant du tube interne (14), la partie de déviation (15) comprenant l'orifice d'aspiration (10A) et permettant à l'air sous pression généré par le ventilateur soufflant (20) et acheminé vers l'extérieur du tube interne (14) de dévier vers une extrémité de base autour de la partie d'extrémité avant du tube interne (14) ; et
un orifice d'éjection (42, 43) est formé entre la partie de déviation (15) et le tube interne (14) ; dans lequel
l'orifice d'éjection (42, 43) est prévu radialement à l'extérieur de la partie la plus étroite (14C) du tube interne (14), la partie la plus étroite (14C) étant prévue plus près de l'extrémité de base que l'orifice d'éjection (42, 43).

2. Aspirateur (1) selon la revendication 1, dans lequel la partie de déviation (15) comprend une surface incurvée continue.

3. Aspirateur (1) selon la revendication 1, dans lequel la partie de déviation (15) comprend un organe en forme d'anneau configuré pour pouvoir être fixé au tube (10) et détaché de celui-ci.

4. Aspirateur (1) selon la revendication 1, dans lequel :
la partie de déviation (15) est configurée pour pouvoir être fixée au tube (10) et détachée de celui-ci ; et
lorsque la partie de déviation (15) est détachée du tube (10), la buse (40) éjecte de l'air sous pression généré par le ventilateur soufflant (20) et acheminé vers l'extérieur du tube interne (14) vers un côté opposé à l'orifice de refoulement (10B) le long de l'extérieur du tube interne (14).

5. Aspirateur (1) selon la revendication 1, dans lequel :
la partie de déviation (15) est configurée pour pouvoir être fixée au tube (10) et détachée de celui-ci ; et
selon que la partie de déviation (15) peut être fixée au tube (10) ou détachée de celui-ci, la buse (40) est configurée pour basculer entre un état dans lequel l'air sous pression généré par le ventilateur soufflant (20) et acheminé vers l'extérieur du tube interne (14), est éjecté vers l'orifice de refoulement (10B) le long de l'intérieur du tube interne (14) et un état dans lequel l'air sous pression généré par le ventilateur (20) et acheminé vers l'extérieur du tube interne (14) est éjecté vers un côté opposé à l'orifice de refoulement (10B) le long de l'extérieur du tube interne (14).

6. Aspirateur (1) selon la revendication 1, dans lequel une partie du tube interne (14) située plus près de l'orifice de refoulement (10B) que la partie la plus étroite (14C) présente une inclinaison par rapport à l'axe du tube interne (14) inférieure à celle d'une partie du tube interne (14) située plus près de l'orifice d'aspiration (10A) que la partie la plus étroite (14C).
